(19) Europäisches Patentamt
European Patent Office
Office européen des brevets

(11) **EP 0 796 517 B1**

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(21) Anmeldenummer: **95936951.3**

(22) Anmeldetag: **23.11.1995**

(51) Int Cl.6: **H02J 3/01**, H02M 1/12, G01R 23/20

(86) Internationale Anmeldenummer:
**PCT/DE95/01632**

(87) Internationale Veröffentlichungsnummer:
**WO 96/18230 (13.06.1996 Gazette 1996/27)**

(54) **VERFAHREN UND VORRICHTUNG ZUR ERZEUGUNG EINES BELIEBIGEN M-PHASIGEN STROMSYSTEMS N-TER ORDNUNG EINER UMRICHTERGESPEISTEN EINRICHTUNG**

PROCESS AND DEVICE FOR GENERATING ANY DESIRED M-PHASE NTH ORDER DISTRIBUTION SYSTEM IN A CONVERTER-FED DEVICE

PROCEDE ET DISPOSITIF DE GENERATION D'UN SYSTEME DE DISTRIBUTION D'ORDRE N A M-PHASES DANS UN DISPOSITIF ALIMENTE PAR UN CONVERTISSEUR

(84) Benannte Vertragsstaaten:
**DE FR GB**

(30) Priorität: **06.12.1994 DE 4443428**

(43) Veröffentlichungstag der Anmeldung:
**24.09.1997 Patentblatt 1997/39**

(73) Patentinhaber: **SIEMENS AKTIENGESELLSCHAFT 80333 München (DE)**

(72) Erfinder: **NACHBAUER, Dieter D-91056 Erlangen (DE)**

(56) Entgegenhaltungen:
**EP-A- 0 106 022          EP-A- 0 197 445**
**EP-A- 0 330 755          US-A- 4 665 474**
**US-A- 5 355 025**

**Beschreibung**

Die Erfindung bezieht sich auf ein Verfahren zur Erzeugung eines beliebigen m-phasigen Stromsystems n-ter Ordnung einer umrichtergespeisten Einrichtung und auf eine Vorrichtung zur Durchführung dieses Verfahrens.

Bei Umrichterspeisung von elektrischen Anlagen, beispielsweise Drehfeldmaschinen oder Drehstromnetzen, treten im Strom neben dem gewünschten Mitsystem 1. Ordnung auch Systeme n-ter Ordnung auf, die beispielsweise wegen der dadurch entstehenden Zusatzverluste unerwünscht sind.

Will man Stromsysteme n-ter Ordnung unterdrücken, so muß dazu ein entsprechendes Spannungssystem erzeugt werden, das als Vorsteuerung von Stellgrößen einer umrichtergespeisten Anlage zugeführt wird.

Im Aufsatz "Koordinatentransformationen für Mehrgrößen-Regelsysteme zur Kompensation und Symmetrierung von Drehstromnetzen" von W. Meusl und H. Waldmann, abgedruckt in der DE-Zeitschrift "Siemens Forsch.- und Entwickl.- Ber.", Band 6, 1977, Nr. 1, Seiten 3 bis 12, wird ein Regelsystem, auch als Mehrgrößen-Regelsystem bezeichnet, für einen statischen Blindleistungskompensator, der bei einem Drehstrom-Lichtbogenofen eingesetzt wird, vorgestellt. Diese Regelung hat die Aufgabe, die Thyristoren des statischen Kompensators immer so anzusteuern, daß die Blindstrombelastung des Netzes möglichst gering, möglichst konstant und daß die Netzbelastung insgesamt möglichst symmetrisch ist. In der Darstellung mit symmetrischen Komponenten wird diese Aufgabe wie folgt definiert: Vom Netzstrom soll der Blindanteil des Mitsystems möglichst klein und konstant sein. Gleichzeitig soll das Gegensystem insgesamt möglichst klein sein.

Da bei dieser Anordnung die $M_p$-Verbindung fehlt, ist das Nullsytem immer gleich Null.

Einleitend bei diesem Aufsatz sind zunächst die wichtigsten Zusammenhänge zwischen einigen Komponentensystemen zusammengestellt und in einer Tabelle 1 in Matrizen dargestellt. Bei der Umrechnung von Phasenströmen ((R,S,T)-Komponenten) in symmetrische Komponenten ((0,1,2)-Komponenten) kann man gemäß der Tabelle 1 auch ein $(0,\alpha,\beta)$-System verwenden. Die direkte Umrechnung ist mit einem höheren gerätetechnischen Aufwand zu realisieren.

Bei diesem Mehrgrößen-Regelsystem für einen statischen Kompensator liefert die Analyse der Ofenströme die Wirk- und Blindstromkomponenten des Mitsystems, gekennzeichnet durch Index 1, und des Gegensystems, gekennzeichnet durch Index 2. Die Wirkstromkomponente des Mitsystems wird nicht weiterverarbeitet. Die Blindstromkomponente des Mitsystems und die beiden Komponenten des Gegensystems sollen durch die Kompensationsanlage aufgehoben werden. Diese Komponenten werden in diesem Regelsystem als Führungsgrößen verwendet. Die Regelgrößen werden aus den netzseitigen Strömen der Kompensationsanlage nach dem gleichen Verfahren wie die Führungsgrößen bestimmt. Da dieses Regelsystem im wesentlichen nur Führungsgrößenänderungen zu verarbeiten hat, wird eine Vorsteuerung verwendet. Die Ausgänge der Mitsystem-Blindstromkomponenten-, der Gegensystem-Wirkstromkomponenten- und der Gegensystem-Blindstromkomponenten-Regelung werden in Phasengrößen transformiert, die dann in Steuersignale für die Thyristoren der Kompensationanlage umgewandelt werden. Mittels dieser Regelung werden für jede Phase der Kompensationsanlage Steuersignale generiert, wodurch bestimmte Werte von Mit- und Gegensystemen auf der Netzseite erreicht werden.

Dieses Regelsystem beeinflußt nur die Komponenten des Mit- und Gegensystems 1. Ordnung und nicht Stromsysteme n-ter Ordnung.

Bei einem Direktumrichter mit offener Schaltung können trotz sinusförmiger Steuerung der Strangspannungen Oberschwingungen auftreten, wenn die von der Last, in der Regel ein Motor, erzeugte Gegenspannung einen von der Sinus form abweichenden Verlauf aufweist. Spezielle Synchronmaschinen erzeugen eine Gegenspannung, welche einen hohen Anteil der 3. Harmonischen enthalten kann. Bei der sehr oft eingesetzten Schenkelpolmaschine kann durch entsprechende Gestaltung des Luftspaltes zwar erreicht werden, daß im Leerlauf eine sehr gute sinusförmige Gegenspannung erzeugt wird, bei Belastung entsteht jedoch durch die zur Achse des Drehfeldes verschobene Polachse eine Feldverzerrung, welche entsprechende Oberschwingungen der erzeugten Gegenspannung zur Folge hat.

Der Erfindung liegt nun die Aufgabe zugrunde, ein Verfahren und eine Vorrichtung zur Erzeugung eines beliebigen m-phasigen Stromsystems n-ter Ordnung anzugeben.

Diese Aufgabe wird erfindungsgemäß gelöst mit den Merkmalen des Anspruchs 1 (Verfahren) und des Anspruchs 6 (Vorrichtung).

Um ein beliebiges Stromsystem n-ter Ordnung zu erzeugen, wird ein entsprechendes Spannungssystem n-ter Ordnung benötigt. Ein derartiges Spannungssystem n-ter Ordnung läßt sich für einen stationären Betriebspunkt mittels eines empirisch gefundenen Spannungszeigers dadurch erzeugen, daß man diesen empirisch ermittelten ruhenden Spannungszeiger aus einem mit n-facher Grundfrequenz umlaufenden Bezugssystem in ein festes Bezugssystem transformiert. Dieser mit n-facher Grundfrequenz umlaufende Spannungszeiger wird mittels einer Koordinatentransformation in Spannungs-Vorsteuersignale umgewandelt. Die Transformationsgröße für diese Transformation des ruhenden Spannungszeigers in einen umlaufenden Spannungszeiger wird mittels eines Winkels ermittelt, der sich entsprechend der Grundfrequenz verändert. Die Phasenlage dieses Winkels ist frei wählbar. Bei einer umrichtergespeisten Drehfeldmaschine kann dies der

Flußlagewinkel φ oder der Rotorlagewinkel λ sein. Aus diesem Winkel wird die Transformationsgröße gebildet, welche sich mit n-facher Frequenz verändert. Bei der Wahl der Koordinatentransformation ist ausschlaggebend, welches Stromsystem (Mit-, Gegen- oder Nullsystem) n-ter Ordnung erzeugt werden soll. Außerdem ist zu berücksichtigen, ob das angegebene Verfahren in einem karthesischen Koordinatensystem (analoge Realisierung) oder in einem Polarkoordinatensystem (digitale Realisierung) realisiert werden soll. Ferner muß die Phasenzahl des Drehstromsystems berücksichtigt werden. In Abhängigkeit dieser Randbedingungen ist bei einem Mit- bzw. Gegensystem als Koordinatenwandler ein 2/m-Wandler bzw. ein P/m-Wandler vorzusehen, wobei m gleich der Phasenzahl des Mehrstromsystems ist. Bei einem Nullsystem wird nur das Signal der Bezugsphase benötigt, das dann allen Phasen als Vorsteuersignal zugeführt wird.

Bei einem vorteilhaften Verfahren wird der ruhende Spannungszeiger nicht empirisch vorgegeben, sondern aus den gemessenen Phasenstrom-Istwerten in Abhängigkeit von vorbestimmten Sollwertkomponenten generiert. Dazu werden die Phasenstrom-Istwerte in Komponenten eines $(0,\alpha,\beta)$-Systems umgerechnet. Diese Komponenten des $(0,\alpha,\beta)$-Systems enthalten jeweils die Information über alle Stromsysteme n-ter Ordnung. In Abhängigkeit von vorbestimmten Sollwertkomponenten für das Mit-, Gegen- und Nullsystem und den berechneten Komponenten des $(0,\alpha,\beta)$-Systems werden für das Mit-, Gegen- und Nullsystem jeweils Regeldifferenz-Stromkomponenten gebildet, die mittels Winkelfunktionen Cosinus und Sinus der n-fachen Betriebsfrequenz vektoriell gedreht werden. Als Ergebnis erhält man für das Mit-, Gegen- und Nullsystem jeweils zwei Signale, die je nach Phasenlage zueinander einen Gleichanteil aufweisen. Anschließend werden diese Signale für jedes System jeweils aufintegriert und man erhält dadurch jeweils eine karthesische Komponente eines ruhenden Spannungszeigers für das Mit-, Gegen- und Nullsystem.

Durch dieses vorteilhafte Verfahren erhält man jeweils einen ruhenden Spannungszeiger des Mit-, Gegen- und Nullsystems, die selbstständig einem geänderten Betriebspunkt der umrichtergespeisten Anlage nachgeführt werden. Bei Änderung des Betriebspunktes ändert sich ebenfalls der Betrag und die Phasenlage des Stromsystems n-ter Ordnung. Entsprechend dieser Änderung werden die Komponenten der ruhenden Spannungszeiger geändert.

Bei einem weiteren vorteilhaften Verfahren, mit dem nur ein Stromnullsystem n-ter Ordnung bearbeitet werden soll, wird der ruhende Spannungszeiger nicht empirisch vorgegeben, sondern aus den gemessenen Phasenstrom-Istwerten generiert. Dazu werden die Phasenstrom-Istwerte addiert und man erhält ein Summensignal, das die Information über die Summe aller Stromnullsysteme enthält. Dieses Summensignal wird mittels Winkelfunktionen Cosinus und Sinus der n-fachen Betriebsfrequenz vektoriell gedreht und man erhält zwei karthesische Komponenten des Summenstromsignals, die je nach Phasenlage zueinander einen Gleichanteil aufweisen. Anschließend werden diese Komponenten jeweils aufintegriert und man erhält dadurch jeweils eine karthesische Komponente des ruhenden Spannungszeigers für das Nullsystem.

Durch dieses vorteilhafte Verfahren erhält man auf besonders einfache Art und Weise einen ruhenden Spannungszeiger, der selbstständig einem geänderten Betriebspunkt nachgeführt wird.

Bei einem weiteren vorteilhaften Verfahren werden zur Bildung jeweils eines ruhenden Spannungszeigers eines Teilsystems (Mit-, Gegen- und Nullsystem) die durch Multiplikation erzeugten Signale eines Teilsystems nicht aufintegriert, sondern diese jeweils verzögert. Dadurch erhält man eine besonders günstige Lösung, um zusätzliche Probleme bei Eingriff von Begrenzungen der umrichtergespeisten Anlage zu vermeiden. Dabei sind sowohl Begrenzungen durch Erreichen der Stellgrenze des Umrichters als auch in der Regelung aktive Begrenzungen des Spannungszeigers zu beachten. Durch die Verzögerung der Signale der Multiplikation nimmt man bewußt eine bleibende Regelabweichung auch im stationären Zustand in Kauf, jedoch können nun keine Integratoren mehr wegdriften, die die Ermittlung des ruhenden Spannungszeigers verfälschen.

Die bleibende Regelabweichung kann in Abhängigkeit eines vorbestimmten Verstärkungsfaktors betragsmäßig derart verändert werden, daß diese bleibende Regelabweichung annähernd Null wird.

Die Vorrichtung zur Durchführung des Verfahrens bzw. des vorteilhaften Verfahrens besteht überwiegend aus Vektordrehern und Koordinatenwandlern, die aus der feldorientierten Regelung hinreichend bekannt sind. Eine vorteilhafte Realisierung derartiger Komponenten erfolgt mittels eines Mikroprozessors, wobei die zusätzlichen Integratoren bei der Durchführung des vorteilhaften Verfahrens ebenfalls softwaremäßig realisiert sind.

Bei einer besonders vorteilhaften Vorrichtung werden anstelle der Integratoren Verzögerungsglieder 1. Ordnung verwendet, wobei im Betragskanal dieser Vorrichtung zusätzlich ein P-Regler mit nachgeschaltetem Begrenzer angeordnet ist. Durch diese Ausgestaltung ist sichergestellt, daß bei Erreichen der Stellgrenze des m-phasigen Umrichters kein unbegrenztes Wegdriften erfolgen kann, wodurch ein optimales Regelergebnis erreicht wird.

Zur weiteren Erläuterung der Erfindung wird im folgenden auf die Figuren der Zeichnung Bezug genommen, wobei die

Figur 1    ein Blockschaltbild einer vorteilhaften Ausführungsform der Vorrichtung zur Durchführung des erfindungsgemäßen Verfahrens zeigt, in

Figur 2 ist ein Blockschaltbild einer vorteilhaften Ausführungsform der Vorrichtung zur Durchführung eines vorteilhaften Verfahrens mit polaren Komponenten dargestellt, in der

Figur 3 sind die Phasenspannungs-Istwerte in einem Diagramm über der Zeit t dargestellt, die

Figur 4 zeigt in einem Diagramm über der Zeit t die zugehörigen Phasenstrom-Istwerte, wobei die

Figur 5 in einem Diagramm über der Zeit t den Signalverlauf an den Ausgängen der Integratoren nach Figur 2 zeigt, und in

Figur 6 ist ein Blockschaltbild einer besonders vorteilhaften Ausführungsform der Vorrichtung zur Durchführung des erfindungsgemäßen Verfahrens veranschaulicht.

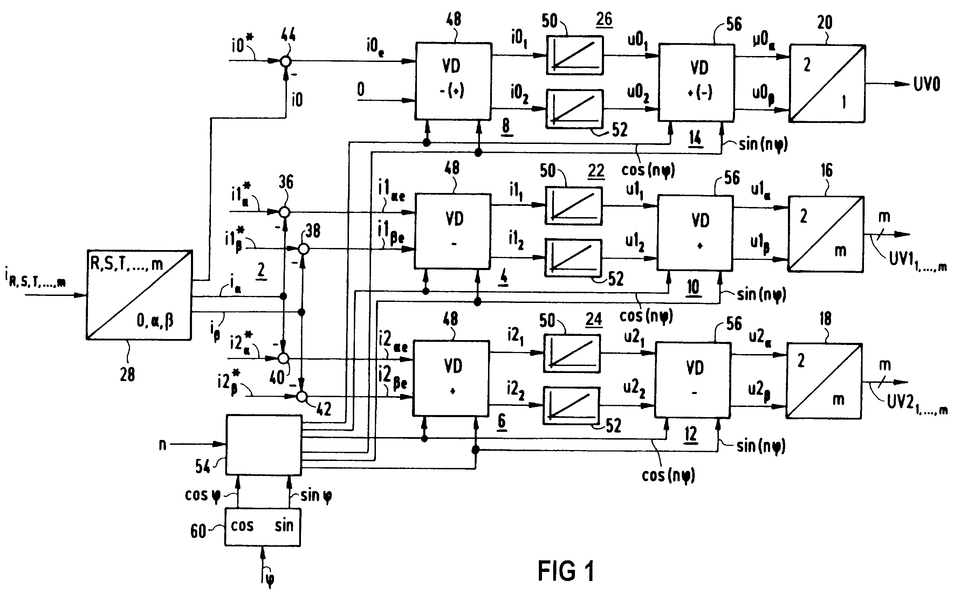

Die Figur 1 zeigt ein Blockschaltbild einer bevorzugten Ausführungsform der Vorrichtung zur Durchführung des erfindungsgemäßen Verfahrens für ein Drehstromsystem. Diese Vorrichtung besteht aus einer Einrichtung 2 zur Bildung von Regeldifferenz-Stromkomponenten $i1_{\alpha e}, i1_{\beta e}, i2_{\alpha e}, i2_{\beta e}$ und $i0_e$ n-ter Ordnung, aus Einrichtungen 4, 6 und 8 jeweils zur Bildung eines ruhenden Spannungszeigers $u1_1, u1_2, u2_1, u2_2$ und $u0_1, u0_2$ eines Mitsystems $i1_m$, eines Gegensystems $i2_m$ und eines Nullsystems $i0_m$ und für jedes Teilsystem $i1_m, i2_m, i0_m$ aus einer Transformationseinrichtung 10, 12 und 14, denen jeweils ein Koordinatenwandler 16, 18 und 20 nachgeschaltet ist. Jeder der zwei Ausgänge eines Teilsystems $i1_m, i2_m$ und $i0_m$ der Einrichtung 2 ist mit einer Einrichtung 4, 6 und 8 verbunden. Die Transformationseinrichtungen 10, 12 und 14 sind eingangsseitig mit den Ausgängen der Einrichtung 4, 6 und 8 verknüpft. Die Reihenschaltung der Einrichtungen 4 bzw. 6 bzw. 8, der Transformationseinrichtung 10 bzw. 12 bzw. 14 und des Koordinatenwandlers 16 bzw. 18 bzw. 20 bilden einen Regelkanal 22 bzw. 24 bzw. 26 für das Mitsystem $i1_m$ bzw. das Gegensystem $i2_m$ bzw. das Nullsystem $i0_m$ dieser Vorrichtung.

Die Einrichtung 2 zur Bildung von Regeldifferenz-Stromkomponenten $i1_{\alpha e}, i1_{\beta e}$ bzw. $i2_{\alpha e}, i2_{\beta e}$ bzw. $i0_e, 0$ n-ter Ordnung des Mitsystems $i1_m$ bzw. des Gegensystems $i2_m$ bzw. des Nullsystems $i0_m$ besteht aus einer Umrechnungseinrichtung 28 und aus jeweils zwei Vergleichern 36, 38 bzw. 40, 42 bzw. 44, 46 für jeweils ein System $i1_m$ bzw. $i2_m$ bzw. $i0_m$. Der Umrechnungseinrichtung 28 werden die gemessenen Strom-Istwerte $i_R, i_S, i_T, ..., i_m$ einer umrichtergespeisten Anlage zugeführt. Mittels der Umrechnungseinrichtung 28 werden diese Strom-Istwerte $i_R, i_S, i_T, ..., i_m$ in Stromkomponenten $i_\alpha, i_\beta$ und $i0$ umgerechnet. Mit den Stromkomponenten $i_\alpha, i_\beta$ und $i0$ hat man somit ein neues Stromsystem, welches aus den Phasengrößen $i_R, i_S, i_T, ..., i_m$ mit Hilfe von reellen Koeffizienten hervorgeht. Bei Unsymmetrie sind die Stromkomponenten (Zeiger) $i_\alpha$ und $i_\beta$ nicht mehr gleich groß und nicht mehr um $\pi/2$ gegeneinander versetzt. Die $\alpha$- und $\beta$-Komponenten des $(0,\alpha,\beta)$-Systems ergeben beispielsweise die ständerorientierten Komponenten. Zur Bestimmung der ständerorientierten Komponenten gilt hierbei die Transformationsformel nach Formel (12) des genannten Aufsatzes auch für die Augenblickswerte der Phasenströme $i_R, i_S$ und $i_T$ (und nicht nur für Zeiger), was auch durch die reellen Koeffizienten zum Ausdruck kommt. Damit gelten die Formeln (11) und (12) des Aufsatzes sowohl für Augenblickswerte der Phasenströme $i_R, i_S$ und $i_T$ als auch für die Zeiger und Drehvektoren. In dieser Umrechnungseinrichtung 28 kann beispielsweise die Matrix der Formel 12 des eingangs genannten Aufsatzes von W. Meusl und H. Waldmann realisiert sein. Diese ermittelten Komponenten $i_\alpha$ und $i_\beta$ n-ter Ordnung des $(0,\alpha,\beta)$-Systems werden jeweils einem invertierenden Eingang der Vergleicher 36, 38 bzw. 40, 42 zugeführt, wobei die Komponente $i0$ einem Vergleicher 44 zugeführt wird. An den nichtinvertierenden Eingängen dieser Vergleicher 36, 38 bzw. 40, 42 bzw. 44 stehen jeweils vorbestimmte Sollwertkomponenten $i1_\alpha^*, i1_\beta^*$ bzw. $i2_\alpha^*, i2_\beta^*$ bzw. $i0^*$ an. Die Ausgänge der Vergleicher 36, 38 bzw. 40, 42 bzw. 44, 46 sind mit den Eingängen der Einrichtung 4 bzw. 6 bzw. 8 zur Bildung eines ruhenden Spannungszeigers $u1_1, u1_2$ bzw. $u2_1, u2_2$ bzw. $u0_1, u0_2$ verknüpft.

Die Einrichtung 4, 6 und 8 zur Bildung jeweils eines ruhenden Spannungszeigers $u1_1, u1_2, u2_1, u2_2$ und $u0_1, u0_2$ sind annähernd identisch aufgebaut, so daß anhand der Einrichtung 4 des Mitsystems $i1_m$ der nähere Aufbau erläutert wird. Die Einrichtung 4 besteht aus einem Vektordreher 48 und zwei Integratoren 50 und 52. Der Unterschied zwischen dem Regelkanal 22 des Mitsystems und dem Regelkanal 24 des Gegensystems besteht darin, daß die Vektordreher 48 und 56 des Mitsystems entgegengesetzte Vorzeichen für den Drehwinkel haben als die Vektordreher 48 und 56 des Gegensystems. An den Signaleingängen des Vektordrehers 48 stehen die Regeldifferenz-Stromkomponenten $i1_{\alpha e}$ und $i1_{\beta e}$ an. Die Transformationseingänge dieses Vektordrehers 48 sind mit den Ausgängen der Einrichtung 54 zur Bildung einer Transformationsgröße $\cos n\varphi$ und $\sin n\varphi$ elektrisch leitend verknüpft. Die Ausgänge dieses Vektordrehers 48 sind jeweils mit einem Integrator 50 bzw. 52 elektrisch leitend verbunden.

Die beiden Komponenten $i1_{\alpha e}$ und $i1_{\beta e}$ enthalten die Information über die Summe aller Strommit- und Stromgegensysteme n-ter Ordnung abzüglich des berücksichtigten Sollwertanteils. Durch das Vorzeichen der Drehung des Vektors, gekennzeichnet durch seine beiden Stromkomponenten $i1_{\alpha e}$ und $i1_{\beta e}$, erhält man an den Ausgängen des Vektordrehers 48 die Stromkomponenten $i1_1$ und $i1_2$, deren Gleichanteile die Differenz für das Mitsystem n-ter Ordnung bestimmen. Integriert man in einen geschlossenen Regelkreis die Gleichanteile auf, so erhält man einen Zeiger, dessen Betrag und Winkel genau dem gesuchten ruhenden Spannungszeiger $u1_1, u1_2$ entspricht.

Mittels dieses ermittelten ruhenden Span-

nungszeigers $u1_1$ und $u1_2$ läßt sich ein Spannungssystem n-ter Ordnung derart erzeugen, indem dieser ruhende Spannungszeiger $u1_1$ und $u1_2$ aus einem mit n-facher Winkelgeschwindigkeit $\omega_S$ umlaufenden Bezugssystem mittels eines Vektordrehers 56 in ein festes Bezugssystem transformiert wird. Als umlaufendes Bezugssystem ist hier ein mit n-facher Grundfrequenz umlaufendes kartesische Koordinatensystem 1/2 mit beliebiger Phasenlage vorgegeben. Als festes Bezugssystem ist das ständerorientierte kartesische Koordinatensystem $\alpha/\beta$ vorgesehen. Durch die Transformation erhält man einen mit n-facher Betriebsfrequenz umlaufenden Spannungszeiger mit den kartesischen Komponenten $u1_\alpha$ und $u1_\beta$. Diese Komponenten $u1_\alpha$ und $u1_\beta$ werden mittels eines Koordinatenwandlers 16 in m Spannungs-Vorsteuersignale $UV1_1,...,m$ gewandelt. Dabei gibt m die Phasenzahl des Systems an. Bei einem hier dargestellten dreiphasigen System ist als Koordinatenwandler 16 ein 2/3-wandler vorgesehen, an dessen Ausgängen drei Spannungs-Vorsteuersignale $UV1_1, UV1_2$ und $UV1_3$ anstehen. Bei der Vorsteuerung eines Nullsystems wird nur das Spannungs-Vorsteuersignal der Bezugsphase benötigt.

Die Transformationsgrößen cos n$\varphi$ und sin n$\varphi$ verändern sich mit der n-fachen Grundfrequenz $\omega_S$. Diese Transformationsgrößen cos n$\varphi$ und sin n$\varphi$ werden mittels einer Einrichtung 54 zur Bildung der Transformationsgrößen cos n$\varphi$ und sin n$\varphi$ aus einem Winkel $\varphi$ (Flußlagewinkel) und einer Zahl n gebildet. Der Winkel $\varphi$ ändert sich dabei mit der momentanen Grundfrequenz. Entsprechend kann dafür der Flußlagewinkel $\varphi$ oder der Rotorlagewinkel $\lambda$ benutzt werden. Beide Winkel $\varphi$ und $\lambda$ liegen in der Regelung einer umrichtergespeisten Anlage meistens in der Praxis vor. Dieser Winkel $\varphi$ wird mittels eines Winkelfunktionsgenerators 60 mit den Winkelfunktionen Cosinus und Sinus multipliziert und in der Einrichtung 54 weiterverarbeitet. Dieser Winkelfunktionsgenerator 60 kann auch Bestandteil der Einrichtung 54 sein. Mittels des Winkelfunktionsgenerators 60 wird aus dem Winkel $\varphi$ eine mit Betriebsfrequenz $\omega_S$ umlaufende Transformationsgröße cos $\varphi$ und sin $\varphi$, die mittels der Einrichtung 54 und der Zahl n in eine Transformationsgröße cos n$\varphi$ und sin n$\varphi$ gewandelt wird, die mit n-facher Grundfrequenz $\omega_S$ umläuft, gebildet. Als Einrichtung 54 können beispielsweise n Vektordreher vorgesehen sein, die elektrisch in Reihe geschaltet sind, wobei an den Transformationseingängen eines jeden Vektordrehers die Ausgangssignale des Winkelfunktionsgenerators 60 anstehen.

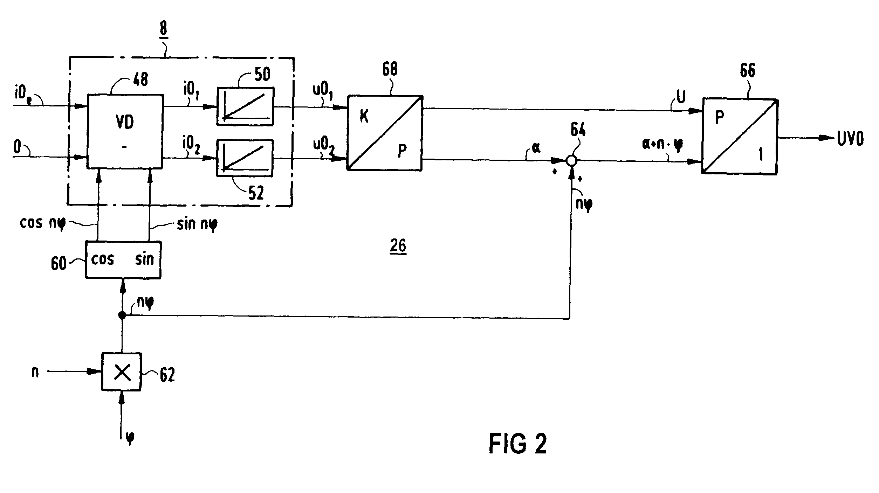

Sind die Komponenten des ermittelten ruhenden Spannungszeigers $u1_1$ und $u1_2$ in Polarkoordinaten (Betrag U, Winkel $\alpha$) angegeben, so vereinfacht sich die Erzeugung eines Spannungssystems n-ter Ordnung für das Mitsystem erheblich. Entsprechend dem Blockschaltbild nach Figur 2, das den Regelkanal 26 des Nullsystems darstellt, wird im Regelkanal 22 des Mitsystems anstelle des Vektordrehers 56, der Einrichtung 54 und des Generators 60 nur noch ein Multiplizierer 62 und ein Addierer 64 benötigt. An den Eingängen des Multiplizierers 62 stehen der Winkel $\varphi$ bzw. $\lambda$ und die Zahl n an. Der Ausgang des Multiplizierers 62 ist mit einem Eingang des Addierers 64 verbunden, an dessen zweiten Eingang dann die Polarkomponente $\alpha$ des ruhenden Spannungszeigers $u1_1$ und $u1_2$ ansteht. Der Ausgang dieses Addierers 64 ist mit einem Eingang eines Koordinatenwandlers 66 verknüpft. Am anderen Eingang dieses Koordinatenwandlers 66 steht die zweite Polarkomponente, nämlich die unveränderte Betragskomponente U des ruhenden Spannungszeigers $u1_1$ und $u1_2$ an. Der Koordinatenwandler 66 erzeugt aus den Polarkomponenten U und $\alpha$+n$\varphi$ m Spannungs-Vorsteuersignale $UV1_{1,...,m}$. Bei einem dreiphasigen System wäre als Koordinatenwandler 66 ein P/3-Wandler vorzusehen, an deren Ausgängen die Spannungs-Vorsteuersignale $UV1_1, UV1_2$ und $UV1_3$ anstehen. Bei der Vorsteuerung eines Nullsystems wird nur das Spannungs-Vorsteuersignal der Bezugsphase benötigt. Somit kann im Regelkanal 26 des Nullsystems anstelle des Koordinatenwandlers 66 ein P/1-Wandler vorgesehen sein.

Die Figur 2 zeigt das Blockschaltbild des Regelkanals 26 des Nullsystems $i0_m$. Soll nur ein Nullsystem n-ter Ordnung beeinflußt werden, so werden die Regelkanäle 22 und 24 des Mit- und des Gegensystems nicht benötigt. Ebenfalls wird die Einrichtung 2 nicht benötigt, da die Stromkomponente $i0_{\alpha e}$ auch auf einfacherem Weg ermittelt werden kann. Die Stromkomponente $i0_{\beta e}$ ist gleich Null. Die Stromkomponente $i0_{\alpha e}$ wird mittels eines nicht näher dargestellten Addierers aus den gemessenen Strom-Istwerten $i_R, i_S$ und $i_T$ einer umrichtergespeisten Anlage bestimmt. Dieses Summensignal i0 enthält die Information über die Summe aller Stromnullsysteme n-ter Ordnung. In der Praxis wird ein Nullsystem mit einer bestimmten Ordnungszahl dominieren, wogegen die Nullsysteme anderer Ordnungszahlen vernachlässigbar sind. Wie eingangs erwähnt, entstehen bei einem Direktumrichter mit offener Schaltung bei sinusförmiger Ansteuerung in den Phasenströmen Harmonische 3. Ordnung. Diese Harmonischen 3. Ordnung bilden ein Nullsystem 3. Ordnung.

Unter der Voraussetzung, daß das Summensignal i0 der Stromnullsysteme nur eine einziges Nullsystem der Ordnungszahl n enthält, weist dieses Summensignal i0 einen sinusförmigen Verlauf mit einem bestimmten Betrag der n-fachen Betriebsfrequenz und einer zunächst unbekannten Phasenlage auf. Durch die Verknüpfung des Nullsystems n-ter Ordnung mit einer Sinus- und Cosinusfunktion der gleichen Frequenz (n$\varphi$) mittels des Vektors 48 erhält man zwei Signale $i0_1$ und $i0_2$, die die doppelte Frequenz aufweisen und je nach Phasenlage zueinander einen bestimmten Gleichanteil aufweisen. Das Nullsystem n-ter Ordnung ist durch den Gleichanteil in diesen Signalen $i0_1$ und $i0_2$ bestimmt. Integriert man in einem geschlossenen Regelkreis die Gleichanteile auf, so erhält man einen Zeiger, dessen Betrag und Winkel genau dem gesuchten ruhenden

Spannungszeiger $u0_1$ und $u0_2$ entspricht.

Im stationären Zustand wird das Stromnullsystem vollständig eliminiert, entsprechend ist das Eingangssignal der beiden Integratoren 50 und 52 Null. Falls das Summensignal der Stromnullsysteme aus mehreren Teilsystemen besteht, kann für jedes Teilsystem die obige Anordnung aufgebaut werden. Ein nicht unterdrücktes Nullsystem mit beliebiger Ordnungszahl bewirkt lediglich, daß der Augenblickswert an den Integratoreingängen auch ungleich Null sein kann, was jedoch nicht für den Mittelwert über eine geeignete Periodendauer gilt. Entsprechend dieser Randbedingung und der gewünschten Dynamik sind die Integratoren 50 und 52 zu dimensionieren.

Es sei darauf hingewiesen, daß die Phasenlage des Winkels φ für die Transformation beliebig sein kann. Da die Einrichtunc 8 das Ausgangssignal in kartesischen Komponenten $u0_1$ und $u0_2$ liefert und die Schaltung gemäß Figur 2 Signale in Polarkoordinaten verarbeitet, ist an der Schnittstelle ein K/P-Wandler 68 vorgesehen. Außerdem ist ein Winkelfunktionsgenerator 60 vorgesehen, der den gebildeten Winkel nφ in eine Transformationsgröße cos nφ und sin nφ wandelt. Ferner ist anstelle des P/m-Koordinatenwandlers 20 ein P/1-Wandler 66 vorgesehen, da bei der Unterdrückung eines Nullsystems n-ter Ordnung ein Vorsteuersignal UV0 allen Phasen zugeführt wird.

Gemäß dem Blockschaltbild nach Figur 1 werden die Regeldifferenz-Stromkomponenten $i1_{\alpha e}$ und $i1_{\beta e}$ bzw. $i2_{\alpha e}$ und $i2_{\beta e}$ bzw. $i0_e$ im Regelkanal 22 des Mitsystems bzw. Regelkanal 24 des Gegensystems bzw. Regelkanal 26 des Nullsystems auf der Eingangsseite des Vektordrehers 48 erzeugt. Somit findet die Ermittlung der angegebenen Regeldifferenz-Stromkomponenten in einem festen Bezugssystem (α/β) statt. Sollen diese Regeldifferenz-Stromkomponenten in einem rotierenden Bezugssystem (1/2) generiert werden, so sind die Vergleicher 36 und 38 bzw. 40 und 42 bzw. 44 jeweils einem Ausgang des Vektordrehers 48 des Mitsystems bzw. des Gegensystems bzw. des Nullsystems nachzuschalten, wobei die Ausgänge jeweils mit einem invertierenden Eingang der Vergleicher 36 und 38 bzw. 40 und 42 bzw. 44 verknüpft sind. Bei dieser Anordnung werden nun die Sollwertkomponenten als Gleichgrößen vorgegeben.

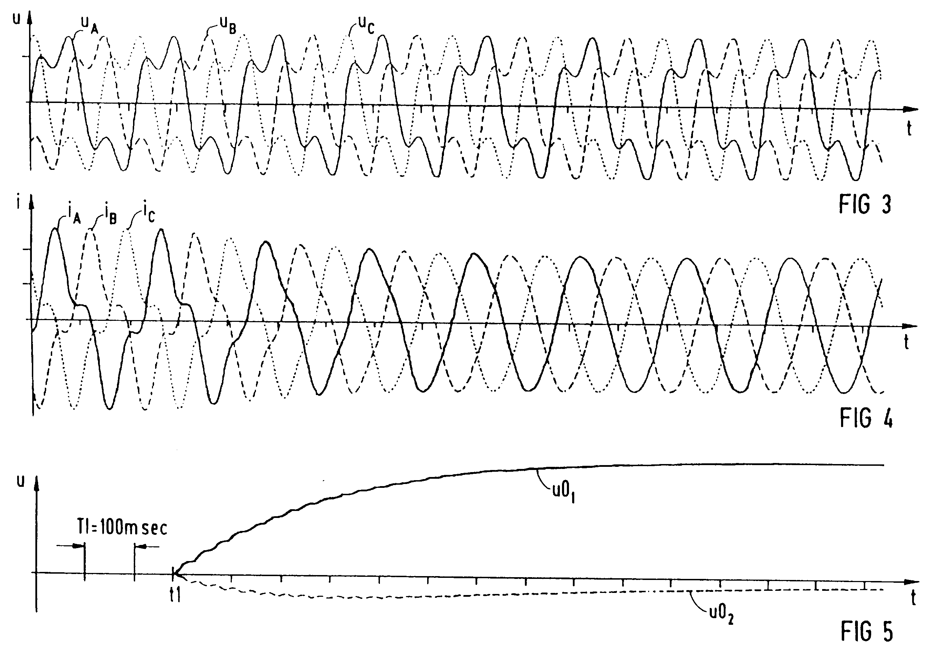

Die Funktionalität der oben beschriebenen Schaltungsanordnung wurde mittels einer Simulation überprüft (Figuren 3 bis 5). In der Speisung einer Synchronmaschine wurde ein Spannungsnullsystem mit der Ordnungszahl n=3 eingebaut. Daraus resultiert ein Stromnullsystem ebenfalls mit der Ordnungszahl n=3. Da in diesem speziellen Fall der Simulation Phasenstromregler vorhanden sind, enthalten die Umrichterspannungen $u_A, u_B$ und $u_C$ (Figur 3) schon vor Freigabe der Integratoren 50 und 52 ein Nullsystem der Ordnungszahl n=3. Erst mit der Freigabe der Integratoren 50 und 52 zum Zeitpunkt tl wird dieses Spannungsnullsystem betrags- und phasenrichtig vorgegeben, so daß nach einem Ausgleichsvorgang bezüglich des Stromes (Figur 4) wieder ein reines Mitsystem der ersten Ordnung vorliegt. Die Figur 5 zeigt die Signalverläufe $u0_1$ und $u0_2$ an den Ausgängen der Integratoren 50 und 52 des Regelkanals 26 des Nullsystems.

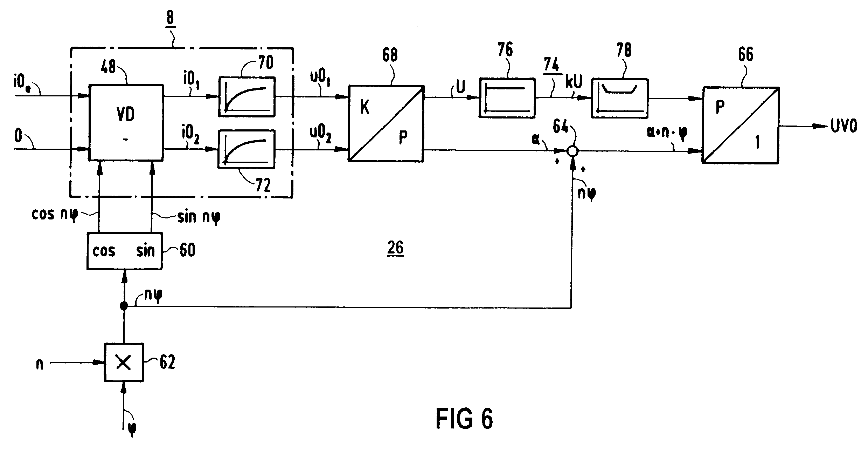

Die Figur 6 zeigt eine besonders vorteilhafte Ausführungsform der Vorrichtung zur Durchführung des Verfahrens zur Unterdrükung von einem Stromnullsystem n-ter Ordnung. Diese Vorrichtung unterscheidet sich von der Vorrichtung nach Figur 2 dadurch, daß anstelle der Integratoren 50 und 52 in der Einrichtung 8 zur Bildung eines ruhenden Spannungszeigers $u0_1$ und $u0_2$ Verzögerungsglieder 70 und 72 erster Ordnung vorgesehen sind. Außerdem ist in einem Betragskanal 74 ein P-Regler 76 mit nachgeschaltetem Begrenzer 78 angeordnet.

Bei der Anordnung gemäß Figur 2 driften die Integratoren 50 und 52 beim Eingriff von Begrenzungen weg. Dabei sind sowohl Begrenzungen durch Erreichen der Stellgrenze einer umrichtergespeisten Anlage als auch in der Regelung aktive Begrenzungen des Spannungszeigers zu beachten. Um dieses Problem zu lösen, sind anstelle der Integratoren 50 und 52 Verzögerungsglieder 70 und 72 erster Ordnung vorgesehen. Dadurch nimmt man bewußt eine bleibende Regelabweichung auch im stationären Zustand in Kauf, die jedoch durch die Verstärkung k des P-Reglers 76 in dem Betragskanal 74 beeinflußt werden kann. Kommt die anschließende Begrenzung des Spannungszeigerbetrages kU in Eingriff, hat dies auf die Winkelkomponente a keinen Einfluß. Dies bedeutet, daß bei aktiver Begrenzung des Spannungszeigerbetrages kU nach wie vor der optimale Winkelwert α+nφ durch die Schaltung ermittelt wird. Unter diesen gegebenen Randbedingungen wird mittels der Vorrichtung gemäß Figur 6 ein optimales Regelergebnis erreicht. Des weiteren ist sichergestellt, daß bei Erreichen der Stellgrenze einer umrichtergespeisten Anlage kein unbegrenztes Wegdriften erfolgen kann.

Mittels dieses Verfahrens und dieser Vorrichtung zur Durchführung des Verfahrens kann die Regelung eines Direktumrichters mit offener Schaltung dermaßen modifiziert werden, daß ein Direktumrichter mit offener Schaltung mit sinusförmiger Ansteuerung damit geregelt werden kann, ohne daß in den Phasenströmen Harmonische 3. Ordnung auftreten, die zur Nutzleistung in der Last nichts beitragen, aber zu einer unnötigen zusätzlichen Belastung des Umrichters führen. Somit erreicht der Direktumrichter mit offener Schaltung in Verbindung mit dem erfindungsgemäßen Verfahren eine Nutzleistungsabgabe, die mit denen von Direktumrichtern mit verketteter Schaltung vergleichbar ist, wobei weder die von dem Transformator bereitgestellte Versorgungsspannung erhöht werden muß, noch daß Drosselspulen verwendet werden müssen.

**Patentansprüche**

1. Verfahren zur Erzeugung eines beliebigen m-phasigen Stromsystems n-ter Ordnung einer umrichtergespeisten Einrichtung, bestehend aus einem m-phasigen Mit-, Gegen- und Nullsystem ($i1_m$;$i2_m$;$i0_m$), wobei für jedes Teilsystem ($i1_m$;$i2_m$;$i0_m$) derart ein Spannungssystem ($u1_\alpha$,$u1_\beta$; $u2_\alpha$,$u2_\beta$;$u0_\alpha$,$u0_\beta$) n-ter Ordnung gebildet wird, indem jeweils ein ermittelter ruhender Spannungszeiger ($u1_1$,$u1_2$;$u2_1$, $u2_2$; $u0_1$,$u0_2$) eines Teilsystems ($i1_m$;$i2_m$;$i0_m$), die jeweils in Beziehung zu Stromkomponenten ($i1_{\alpha e}$, $i1_{\beta e}$;$i2_{\alpha e}$,$i2_{\beta e}$;$i0_e$) n-ter Ordnung eines Teilsystems ($i1_m$;$i2_m$;$i0_m$) stehen, aus einem mit n-facher Grundfrequenz umlaufenden Bezugssystem (1/2) in ein festes Bezugssystem ($\alpha$ /$\beta$) transformiert werden, und diese gebildeten Spannungssysteme ($u1_\alpha$,$u1_\beta$; $u2_\alpha$,$u2_\beta$;$u0_\alpha$, $u0_\beta$) der Teilsysteme ($i1_m$; $i2_m$; $i0_m$) jeweils in m Spannungs-Vorsteuersignale ($UV1_{1,...,m}$; $UV2_{1,...,m}$;UVO) gewandelt werden, die als Vorsteuerung von Stellgrößen ($u_1$,...,$u_m$) einer Einrichtung verwendet werden.

2. Verfahren nach Anspruch 1, wobei jeder ruhende Spannungszeiger (($u1_1$,$u1_2$;$u2_1$,$u2_2$;$u0_1$,$u0_2$) eines Teilsystems ($i1_m$;$i2_m$;$i0_m$) in Abhängigkeit von m ermittelten Stromistwerten ($i_R$,$i_S$,$i_T$,...,$i_m$) und vorbestimmten Sollwertkomponenten ($i1_\alpha^*$,$i1_\beta^*$;$i2_\alpha^*$,$i2_\beta^*$; $i0^*$) der Teilsysteme ($i1_m$;$i2_m$;$i0_m$) des m-phasigen Stromsystems n-ter Ordnung ermittelt wird.

3. Verfahren nach einem der Ansprüche 1 oder 2, wobei jeder ruhende Spannungszeiger ($u1_1$,$u1_2$;$u2_1$, $u2_2$;$u0_1$,$u0_2$) eines Teilsystems ($i1_m$;$i2_m$;$i0_m$) wie folgt bestimmt wird:

   a) Bildung von orthogonalen Regeldifferenzkomponenten ($i1_{\alpha e}$,$i1_{\beta e}$;$i2_{\alpha e}$,$i2_{\beta e}$;$i0_e$) mittels vorbestimmter Sollwertkomponenten ($i1_\alpha^*$,$i1_\beta^*$; $i2_\alpha^*$,$i2_\beta^*$;$i0^*$) und aus gemessenen Phasenströmen ($i_R$,$i_S$,$i_T$,...,$i_m$) bestimmten Stromkomponenten ($i_\alpha$,$i_\beta$;$i0$) eines (0,$\alpha$,$\beta$)-Systems,
   b) Vektorielle Drehung dieser gebildeten Regeldifferenzkomponenten ($i1_{\alpha e}$,$i1_{\beta e}$;$i2_{\alpha e}$,$i2_{\beta e}$; $i0_e$) n-ter Ordnung mit einer Sinus- und Cosinusfunktion der n-fachen Betriebsfrequenz und
   c) Aufintegrierung dieser gebildeten Multiplikationsergebnisse ($i1_1$,$i1_2$;$i2_1$,$i2_2$;$i0_1$,$i0_2$).

4. Verfahren nach Anspruch 3, wobei zur Bildung jeweils eines ruhenden Spannungszeigers ($u1_1$,$u1_2$; $u2_1$,$u2_2$;$u0_1$,$u0_2$) eines Teilsystems ($i1_m$;$i2_m$;$i0_m$) anstelle einer Aufintegrierung der gebildeten Multiplikationsergebnisse ($i1_1$,$i1_2$; $i2_1$,$i2_2$; $i0_1$,$i0_2$) diese jeweils verzögert werden.

5. Verfahren nach Anspruch 4, wobei die Komponenten jeweils eines ruhenden Spannungszeigers ($u1_1$,

$u1_2$;$u2_1$,$u2_2$;$u0_1$,$u0_2$) der Teilsysteme ($i1_m$;$i2_m$;$i0_m$) in Abhängigkeit eines vorbestimmten Verstärkungsfaktors (k) verändert werden.

6. Vorrichtung zur Durchführung des Verfahrens nach Anspruch 1, wobei für jedes Teilsystem ($i1_m$;$i2_m$; $i0_m$) eine Transformationseinrichtung (10,12,14) vorgesehen ist, die jeweils ausgangsseitig mit einem Koordinatenwandler (16,18,20) verknüpft sind, wobei für diese Transformationseinrichtungen (10,12,14) eine Einrichtung (54) zur Bildung von Transformationsgrößen (cos n$\varphi$,sin n$\varphi$), ein Winkelfunktionsgenerator (60) und ein Vektordreher (56) vorgesehen sind, deren Winkeleingänge jeweils mit einem Ausgang eines Winkelfunktionsgenerators (60) verknüpft sind und an seinem weiteren Eingang eine Zahl (n) ansteht, wobei jede Transformationseinrichtung (10,12,14) einen Vektordreher (56) aufweist und wobei die Ausgänge dieser Einrichtung (54) mit Transformationseingängen jedes Vektordrehers (56) verknüpft sind, an deren Signaleingängen jeweils eine Komponente ($u1_1$,$u1_2$; $u2_1$, $u2_2$; $u0_1$,$u0_2$) eines ermittelten ruhenden Spannungszeigers eines Teilsystems ($i1_m$;$i2_m$;$i0_m$) ansteht und am Eingang des Winkelfunktionsgenerators (60) ein Winkel ($\varphi$,$\lambda$) mit Betriebsfrequenz und beliebiger Phasenlage ansteht.

7. Vorrichtung nach Anspruch 6, wobei einer jeden Transformationseinrichtung (10,12,14) eine Einrichtung (4,6,8) zur Bestimmung eines ruhenden Spannungszeigers ($u1_1$,$u1_2$; $u2_1$,$u2_2$; $u0_1$,$u0_2$) vorgeschaltet ist, die aus einem Vektordreher (48) und zwei Integratoren (50,52) besteht, wobei die Transformationseingänge des Vektordrehers (48) mit der Einrichtung (54) zur Bildung von Transformationsgrößen (cos n$\varphi$,sin n$\varphi$) und seine Ausgänge mit einem Integrator (50,52) verknüpft sind und wobei an den nicht invertierenden Eingängen dieser Vergleicher vorbestimmte Sollwertkomponenten und an den Eingängen der Umrechnungseinrichtung (28) gemessene Stromwerte ($i_R$,$i_S$,$i_{T,...,im}$) anstehen.

8. Vorrichtung nach Anspruch 6 oder 7, wobei einer jeden Einrichtung (4,6,8) zur Bestimmung eines ruhenden Spannungszeigers ($u1_1$,$u1_2$;$u2_1$,$u2_2$; $u0_1$, $u0_2$) eine Einrichtung (2) zur Bildung von Stromkomponenten ($i1_{\alpha e}$,$i1_{\beta e}$;$i2_{\alpha e}$,$i2_{\beta e}$;$i0_e$) n-ter Ordnung der Teilsysteme ($i1_m$; $i2_m$;$i0_m$) vorgeschaltet ist, an deren Isteingängen m gemessene Stromwerte ($i_R$, $i_S$,$i_{T,...,im}$) und an deren Solleingängen vorbestimmte Sollwertkomponenten $i1_\alpha^*$,$i1_\beta^*$;$i2_\alpha^*$,$i2_\beta^*$;$i0^*$ der Teilsysteme ($i1_m$;$i2_m$;$i0_m$) anstehen.

9. Vorrichtung nach Anspruch 8, wobei die Einrichtung (2) zur Bildung von Stromkomponenten ($i1_{\alpha e}$,$i1_{\beta e}$; $i2_{\alpha e}$,$i2_{\beta e}$;$i0_e$) n-ter Ordnung der Teilsysteme ($i1_m$; $i2_m$;$i0_m$) aus einer den Istwerteingängen dieser Einrichtung (2) nachgeschalteten Umrechnungseinrichtung (28) und aus mehreren Vergleichern (36,38; 40,42;44) besteht, deren invertierende Eingänge jeweils mit einem Ausgang der Umrechnungseinrichtung (28) und deren nichtinvertierende Eingänge jeweils mit einem Sollwerteingang dieser Einrichtung (2) verknüpft sind.

10. Vorrichtung nach Anspruch 7, wobei anstelle der Integratoren (50,52) in der Einrichtung (4,6,8) zur Bestimmung eines ruhenden Spannungszeigers ($u1_1$, $u1_2$;$u2_1$,$u2_2$;$u0_1$,$u0_2$) Verzögerungsglieder (70,72) erster Ordnung verwendet werden, deren Ausgänge mit der Transformationseinrichtung (10,12,14) verknüpft sind.

11. Vorrichtung nach einem der Ansprüche 6 bis 10, wobei jede Transformationseinrichtung (10,12,14) einen K/P-Koordinatenwandler (68) aufweist, dessen Phasenausgang mit einem Eingang eines Addierers (64) verknüpft ist, dessen zweiter Eingang mit einem Ausgang eines Multiplizierers (62) und einem Eingang des Winkelfunktionsgebers (60) verbunden ist und wobei der Multiplizierer (62) ausgangsseitig mit einem Eingang des Winkelfunktionsgebers (60) verknüpft ist.

12. Vorrichtung nach Anspruch 11, wobei ein Betragsausgang (74) des K/P-Koordinatenwandlers (68) mit einem P-Regler (76) mit nachgeschaltetem Begrenzer (78) verbunden ist.

13. Verwendung des Verfahrens nach Anspruch 1 bei einem Direktumrichter mit offener Schaltung.

**Claims**

1. Method for producing any desired m-phase, n-th order electrical system in a converter-fed device, comprising an m-phase positive, negative and zero phase-sequence system ($i1_m$;$i2_m$;$i0_m$), an n-th order voltage system ($u1_a$,$u1_b$; $u2_a$,$u2_b$; $u0_a$,$u0_b$) being formed for each subsystem in such a manner that in each case one determined stationary voltage vector ($u1_1$,$u1_2$;$u2_1$,$u2_2$; $u0_1$,$u0_2$), which vectors are in each case related to n-th order current components ($i1_{ae}$,$i1_{be}$; $i2_{ae}$,$i2_{be}$;$i0_e$) of a subsystem ($i1_m$;$i2_m$;$i0_m$), is transformed from a reference system (1/2) rotating at n-times the fundamental frequency into a fixed reference system (a/b), and these voltage systems ($u1_a$,$u1_b$; $u2_a$,$u2_b$; $u0_a$, $u0_b$) that are formed for the subsystems ($i1_m$;$i2_m$;$i0_m$) are each converted into m voltage pilot control signals ($UV1_{1,...,m}$; $UV2_{1,...,m}$;$UVO$) which are used for pilot control of manipulated variables ($u_{1,...,}u_m$).

2. Method according to Claim 1, each stationary voltage vector ($u1_1$,$u1_2$;$u2_1$,$u2_2$; $u0_1$,$u0_2$) of a subsystem ($i1_m$;$i2_m$;$i0_m$) being determined as a function of m determined actual current values ($i_R$,$i_S$,$i_T$,...,$i_m$) and predetermined nominal value components ($1_a^*$, $i1_b^*$;$i2_a^*$,$i2_b^*$;$i0^*$) of the subsystems ($i1_m$;$i2_m$;$i0_m$) of the m-phase, n-th order electrical system.

3. Method according to one of Claims 1 or 2, each stationary voltage vector ($u1_1$,$u1_2$;$u2_1$,$u2_2$; $u0_1$,$u0_2$) of a subsystem ($i1_m$;$i2_m$;$i0_m$) being determined as follows:

   a) Formation of orthogonal control difference components ($i1_{ae}$,$i1_{be}$; $i2_{ae}$,$i2_{be}$;$i0_e$) by means of predetermined reference value components ($1_a^*$,$i1_b^*$;$i2_a^*$,$i2_b^*$;$i0^*$) and current components ($i_a$, $i_b$,$i_0$) which are determined from measured phase currents ($i_R$,$i_S$,$i_T$,...,$i_m$), of a (0,a,b) system,
   b) vectorial rotation of these n-th order control difference components ($i1_{ae}$,$i1_{be}$; $i2_{ae}$,$i2_{be}$;$i0_e$) which are formed, using a sine and cosine function at n-times the operating frequency, and
   c) integration of these multiplication results ($i1_1$, $i1_2$;$i2_1$,$i2_2$;$i0_1$,$i0_2$) which are formed.

4. Method according to Claim 3, a stationary voltage vector ($u1_1$,$u1_2$;$u2_1$,$u2_2$; $u0_1$,$u0_2$) of a subsystem ($i1_m$;$i2_m$;$i0_m$) in each case being formed by in each case delaying the multiplication results ($i1_1$,$i1_2$;$i2_1$, $i2_2$; $i0_1$,$i0_2$) which are formed, instead of by integrating them.

5. Method according to Claim 4, the components of in each case one stationary voltage vector ($u1_1$,$u1_2$; $u2_1$,$u2_2$; $u0_1$,$u0_2$) of the subsystems ($i1_m$;$i2_m$;$i0_m$) being varied as a function of a predetermined gain factor (k).

6. Apparatus for carrying out the method according to Claim 1, each subsystem ($i1_m$;$i2_m$;$i0_m$) being provided with a transformation device (10,12,14), each of which is linked on the output side to a coordinate converter (16,18,20), these transformation devices (10, 12, 14) being provided with a device (54) for forming transformation variables (cos nf,sin nf), an angle function generator (60) and a vector rotator (56), the angle inputs of which device in each case being linked to one output of an angle function generator (60) and a number (n) being present at its other input, each transformation device (10, 12, 14) having a voltage rotator (56) and the outputs of this device (54) being linked to transformation inputs of each voltage rotator (56), at whose signal inputs a component ($u1_1$,$u1_2$;$u2_1$,$u2_2$; $u0_1$,$u0_2$) of a determined stationary voltage vector on a subsystem ($i1_m$;$i2_m$;$i0_m$) is in each case present, and an angle (f,l) at the operating frequency and at any phase angle being present at the input of the angle function generator (60).

7. Apparatus according to Claim 6, each transformation device (10,12,14) having connected upstream of it a device (4,6,8) for determining a stationary voltage vector $(u1_1, u1_2; u2_1, u2_2; u0_1, u0_2)$, which device comprises a vector rotator (48) and two integrators (50,52), the transformation inputs of the vector rotator (48) being linked to the device (54) for forming transformation variables (cos nf, sin nf), and its outputs being linked to an integrator (50,52), predetermined nominal value components being present at the non-inverting inputs of these comparators, and measured current values $(i_R, i_S, i_T, ..., i_m)$ being present at the inputs of the conversion device (28).

8. Apparatus according to Claim 6 or 7, each device (4,6,8) for determining a stationary voltage vector $(u1_1, u1_2; u2_1, u2_2; u0_1, u0_2)$, having connected upstream of it a device (2) for forming n-th order current components $(i1_{ae}, i1be; i2_{ae}, i2_{be}; i0_e)$ of the subsystems $(i1_m; i2_m; i0_m)$, at whose actual inputs m measured current values $(i_R, i_S, i_T, ..., i_m)$ are present, and at whose nominal inputs predetermined nominal value components $(1_a^*, i1_b^*; i2_a^*, i2_b^*; i0^*)$ of the subsystems $(i1_m; i2_m; i0_m)$ are present.

9. Apparatus according to Claim 8, the device (2) for forming n-th order current components $(i1_{ae}, i1_{be}; i2_{ae}, i2_{be}; i0_e)$ of the subsystems $(i1_m; i2_m; i0_m)$ comprising a conversion device (28), which is connected downstream of the actual value inputs of this device (2), and a plurality of comparators (36,38; 40,42;44) whose inverting inputs are in each case linked to an output of the conversion device (28), and whose non-inverting inputs are in each case linked to a nominal value input of this device (2).

10. Apparatus according to Claim 7, first order delay elements (70,72), whose outputs are linked to the transformation device (10, 12, 14), being used instead of the integrators (50,52) in the device (4,6,8) for determining a stationary voltage vector $(u1_1, u1_2; u2_1, u2_2; u0_1, u0_2)$.

11. Apparatus according to one of Claims 6 to 10, each transformation device (10, 12, 14) having a C/P coordinate converter (68) whose phase output is linked to an input of an adder (64), whose second input is connected to an output of a multiplier (62) and to an input of the angle function generator (60), and the multiplier (62) being linked on the output side to an input of the angle function generator (60).

12. Apparatus according to Claim 11, a magnitude output (74) of the C/P coordinate converter (68) being linked to a P-regulator (76) with a downstream limiter (78).

13. Application of the method according to Claim 1 to a direct converter with an open circuit.

## Revendications

1. Procédé de production d'un système de courant d'ordre n à m phases dans un dispositif alimenté par un convertisseur, constitué de systèmes direct, inverse et neutre à m phases $(i1_m; i2_m; i0_m)$, dans lequel on forme pour chaque sous-système $(i1_m; i2_m; i0_m)$ un système de tension $(u1_\alpha, u1_\beta; u2_\alpha, u2_\beta; u0_\alpha, u0_\beta)$ d'ordre n en transformant à chaque fois un vecteur de tension stationnaire $(u1_1, u1_2; u2_1, u2_2; u0_1, u0_2)$ déterminé d'un sous-système $(i1_m; i2_m; i0_m)$, qui est à chaque fois en relation avec des composantes de courants $(i1_{\alpha e}, i1_{\beta e}; i2_{\alpha e}, 12_{\beta e}; i0_e)$ d'ordre n d'un sous-système $(i1_m; i2_m; i0_m)$, à partir d'un système de référence (1/2) tournant à une fréquence fondamentale n-aire en un système de référence fixe $(\alpha/\beta)$ et en convertissant ces systèmes de tensions formés $(u1_\alpha, u1_\beta; u2_\alpha, u2_\beta; u0_\alpha, u0_\beta)$ des sous-systèmes $(i1_m; i2_m; i0_m)$ respectivement en m signaux de commande préalable de tension $(UV1_{1,...,m}; UV2_{1,...,m}; UV0)$ qui sont utilisés comme commande préalable de grandeurs réglantes $(u_1,..., u_m)$ d'un dispositif.

2. Procédé selon la revendication 1, dans lequel on détermine chaque vecteur de tension stationnaire $(u1_1, u1_2; u2_1, u2_2; u0_1, u0_2)$ d'un sous-système $(i1_m; i2_m; i0_m)$ en fonction de m valeurs réelles de courants $(iR, i_S, i_T,..., i_m)$ mesurées et de composantes de valeurs de consigne $(, ; , ; i0^*)$ prédéterminées des sous-systèmes $(i1_m; i2_m; i0_m)$ du système d'ordre n à m phases.

3. Procédé selon l'une des revendications 1 ou 2, dans lequel on détermine chaque vecteur de tension stationnaire $(u1_1, u1_2; u2_1, u2_2; u0_1, u0_2)$ d'un sous-système $(ilm; i2_m; i0_m)$ avec les opérations suivantes :

    a) formation de composantes de différence de régulation orthogonales $(i1_{\alpha e}, i1_{\beta e}; i2_{\alpha e}, 12_{\beta e}; i0_e)$ au moyen de composantes de valeurs de consigne $(, ; , ; i0^*)$ prédéterminées et de composantes de courants $(i_\alpha, i\beta; i0)$, déterminées à partir de courants de phases $(iR, i_S, i_T,..., i_m)$ mesurés, d'un système $(0, \alpha, \beta)$,
    b) rotation vectorielle de ces composantes de différence de régulation $(i1_{\alpha e}, i1_{\beta e}; i2_{\alpha e}, 12_{\beta e}; i0_e)$ d'ordre n ainsi formées avec une fonction de sinus et de cosinus de la fréquence de fonctionnement n-aire, et

c) intégration de ces résultats de multiplication ($i1_1$, $i1_2$ ; $i2_1$, $i2_2$ ; $i0_1$, $i0_2$) ainsi formés.

4. Procédé selon la revendication 3, dans lequel, pour la formation de chaque vecteur de tension stationnaire ($u1_1$, $u1_2$ ; $u2_1$, $u2_2$ ; $u0_1$, $u0_2$) d'un sous-système ($i1_m$ ; $i2_m$ ; $i0_m$), au lieu d'intégrer les résultats de multiplication formés ($i1_1$, $i1_2$ ; $i2_1$, $i2_2$ ; $i0_1$, $i0_2$), on les retarde.

5. Procédé selon la revendication 4, dans lequel on modifie les composantes de chaque vecteur de tension stationnaire ($u1_1$, $u1_2$ ; $u2_1$, $u2_2$ ; $u0_1$, $u0_2$) des sous-systèmes ($i1_m$ ; $i2_m$ ; $i0_m$) en fonction d'un facteur d'amplification (k) prédéterminé.

6. Dispositif pour la mise en oeuvre du procédé selon la revendication 1, dans lequel il est prévu pour chaque sous-système ($i1_m$ ; $i2_m$ ; $i0_m$) un dispositif de transformation (10, 12, 14) qui est relié à chaque fois en sortie à un convertisseur de coordonnées (16, 18, 20), dans lequel il est prévu pour ces dispositifs de transformation (10, 12, 14) un dispositif (54) destiné à la formation de grandeurs de transformation (cos nφ, sin nφ), un générateur de fonction angulaire (60) et un dispositif de rotation de vecteur (56) dont les entrées d'angles sont reliées à chaque fois à une sortie d'un générateur de fonction angulaire (60) et dont une autre entrée reçoit un nombre (n), dans lequel chaque dispositif de transformation (10, 12, 14) comporte un dispositif de rotation de vecteur (56) et dans lequel les sorties de ce dispositif (54) sont reliées aux entrées de transformation de chaque dispositif de rotation de vecteur (56) dont les entrées de signaux reçoivent à chaque fois une composante ($u1_1$, $u1_2$ ; $u2_1$, $u2_2$ ; $u0_1$, u02) d'un vecteur de tension stationnaire déterminé d'un sous-système ($i1_m$ ; $i2_m$ ; $i0_m$), un angle (φ, λ) avec une fréquence de fonctionnement et avec une relation de phase quelconque étant appliqué à l'entrée du générateur de fonction angulaire (60).

7. Dispositif selon la revendication 6, dans lequel il est branché, du côté amont de chaque dispositif de transformation (10, 12, 14), un dispositif (4, 6, 8) qui est destiné à déterminer un vecteur de tension stationnaire ($u1_1$, $u1_2$ ; $u2_1$, $u2_2$ ; $u0_1$, $u0_2$) et qui est constitué d'un dispositif de rotation de vecteur (48) et de deux intégrateurs (50, 52), dans lequel les entrées de transformation du dispositif de rotation de vecteur (48) sont reliées au dispositif (54) destiné à la formation de grandeurs de transformation (cos nφ, sin nφ) et ses sorties sont reliées à un intégrateur (50, 52) et dans lequel les entrées non inversées de ces comparateurs reçoivent des composantes de valeurs de consigne prédéterminées et les entrées du dispositif de conversion (28) reçoivent des valeurs de courants mesurées ($i_R$, $i_S$, $i_T$, ..., $i_m$).

8. Dispositif selon la revendication 6 ou 7, dans lequel il est branché, du côté amont de chaque dispositif (4, 6, 8) destiné à la détermination d'un vecteur de tension stationnaire ($u1_1$, $u1_2$ ; $u2_1$, $u2_2$ ; $u0_1$, $u0_2$), un dispositif (2) qui est destiné à la formation de composantes de courants ($i1_{\alpha e}$, $i1_{\beta e}$ ; $i2_{\alpha e}$, $12_{\beta e}$ ; $i0_e$) d'ordre n des sous-systèmes (ilm ; $i2_m$ ; $i0_m$) et dont les entrées réelles reçoivent m valeurs de courants mesurées ($i_R$, $i_S$, $i_T$, ..., $i_m$) et dont les entrées de consigne reçoivent des composantes de valeurs de consigne prédéterminées (, ; , ; i0*) des sous-systèmes ($i1_m$ ; $i2_m$ ; $i0_m$).

9. Dispositif selon la revendication 8, dans lequel le dispositif (2) destiné à la formation de composantes de courants ($i1_{\alpha e}$, $i1_{\beta e}$ ; $i2_{\alpha e}$, $i2_{\beta e}$ ; $i0_e$) d'ordre n des sous-systèmes ($i1_m$ ; $i2_m$ ; $i0_m$) est constitué d'un dispositif de conversion (28), branché du côté aval des entrées de valeurs réelles de ce dispositif (2), et de plusieurs comparateurs (36, 38 ; 40, 42 ; 44) dont les entrées inversées sont reliées à chaque fois à une sortie du dispositif de conversion (28) et dont les entrées non inversées sont reliées à chaque fois à une entrée de valeur de consigne de ce dispositif (2).

10. Dispositif selon la revendication 7, dans lequel on utilise au lieu des intégrateurs (50, 52) dans le dispositif (4, 6, 8) destiné à la détermination d'un vecteur de tension stationnaire ($u1_1$, $u1_2$ ; $u2_1$, $u2_2$ ; u01, u02) des éléments de retardement (70, 72) de premier ordre dont les sorties sont reliées au dispositif de transformation (10, 12, 14).

11. Dispositif selon l'une des revendications 6 à 10, dans lequel chaque dispositif de transformation (10, 12, 14) comporte un convertisseur de coordonnées K/P (68) dont la sortie de phase est reliée à une entrée d'un additionneur (64) dont la deuxième entrée est reliée à une sortie d'un multiplicateur (62) et à une entrée du générateur de fonction angulaire (60) et dans lequel le multiplicateur (62) est relié en sortie à une entrée du générateur de fonction angulaire (60).

12. Dispositif selon la revendication 11, dans lequel une sortie de norme (74) du convertisseur de coordonnées K/P (68) est reliée à un régulateur proportionnel (76) du côté aval duquel est branché un limiteur (78).

13. Utilisation du procédé selon la revendication 1 pour un convertisseur direct à circuit ouvert.

FIG 1

FIG 2

EP 0 796 517 B1

u

$u_A$    $u_B$    $u_C$

t

**FIG 3**

i

$i_A$  $i_B$  $i_C$

t

**FIG 4**

u

Tl=100msec

$u0_1$

t1    t

$u0_2$

**FIG 5**

FIG 6

EP 0 796 517 B1